(19) Europäisches Patentamt
European Patent Office
Office européen des brevets

(11) **EP 4 600 393 A1**

(12) **EUROPEAN PATENT APPLICATION**
published in accordance with Art. 153(4) EPC

(43) Date of publication:
**13.08.2025 Bulletin 2025/33**

(21) Application number: **23874565.7**

(22) Date of filing: **29.08.2023**

(51) International Patent Classification (IPC):
*C22C 38/00* (2006.01)   *C21D 9/08* (2006.01)
*C22C 38/58* (2006.01)

(52) Cooperative Patent Classification (CPC):
**C21D 9/08; C22C 38/00; C22C 38/58**

(86) International application number:
**PCT/JP2023/031092**

(87) International publication number:
**WO 2024/075433 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.10.2022 JP 2022159399**

(71) Applicant: **NIPPON STEEL CORPORATION**
**Chiyoda-ku**
**Tokyo 100-8071 (JP)**

(72) Inventor: **SHITARA, Yutaro**
**Tokyo 100-8071 (JP)**

(74) Representative: **J A Kemp LLP**
**80 Turnmill Street**
**London EC1M 5QU (GB)**

(54) **SEAMLESS STEEL PIPE AND METHOD FOR MANUFACTURING SEAMLESS STEEL PIPE**

(57) A seamless steel pipe is provided that has a reduced difference between the strength with full wall thickness and the strength after cutting. A seamless steel pipe has a predetermined chemical composition; Fn1 represented by Expression (1) provided below is not less than 0.44; the crystal grain size number for a central portion as determined along the wall thickness in accordance with ASTM E112-13 (2021) is not less than 6.0; and each of NDos/NDc and NDis/NDc is not less than 0.60, where NDos is the number density of V-containing particles with equivalent circle diameters of 10 to 100 nm as measured in a cross section perpendicular to the pipe-axis direction and at a depth of 2 mm from the outer surface of the steel pipe; NDis is the number density of V-containing particles with equivalent circle diameters of 10 to 100 nm as measured at a depth of 2 mm from the inner surface of the steel pipe; and NDc is the number density of V-containing particles with equivalent circle diameters of 10 to 100 nm as measured in a central portion as determined along the wall thickness,

$$Fn1 = C+Mn/6+(Cr+Mo+V)/5+(Cu+Ni)/15 \qquad (1),$$

where each chemical symbol for an element in Expression (1) is assigned the content of that element in mass %.

EP 4 600 393 A1

*Fig.2*

**Description**

TECHNICAL FIELD

The present invention relates to a seamless steel pipe and a method of manufacturing a seamless steel pipe.

BACKGROUND ART

Onshore and shallow-water oil and gas wells have been depleted in recent years, and the development of deepwater offshore oil and gas wells (hereinafter referred to as "deepwater fields") has been gaining momentum. To transport fluids in the case of deepwater fields, thick-walled line pipes are used to provide sufficient strength against high external pressures and make up for the decrease in strength caused by high-temperature production fluids.

WO 2013/161567 A1 describes a seamless steel pipe with high strength and toughness even with a thick wall. This seamless steel pipe includes, in mass %, 0.03 to 0.08 % C and other elements and has a wall thickness of 50 mm or larger; the average crystal grain diameter of prior austenite grains in the surface layer is smaller than 80 $\mu$m; and the difference between the average crystal grain diameter of prior austenite grains in a surface layer and that for a central portion as determined along the wall thickness is smaller than 50 pm.

WO 2015/019708 A1 describes a high-strength and high-toughness seamless steel pipe for line pipe with reduced surface hardness. This seamless steel pipe for line pipe includes, in mass %: 0.03 to 0.10 % C; 0.04 to 2.0 % Ni; and other elements, where metal particles mainly composed of Ni or Cu with an average equivalent circle diameter of 0.1 to 5 $\mu$m are present in the scale formed on the surface of the steel pipe, and the distance from the boundary between the base material of the steel pipe and the scale to a region where no metal particles are present is 20 $\mu$m or larger.

WO 2017/141341 A1 describes a seamless steel pipe that can provide a yield strength of 555 MPa or higher and good SSC resistance in a stable manner. This seamless steel pipe includes, in mass %, 0.02 to 0.15 % C and other elements, with a carbon equivalent Ceq not lower than 0.430 % and lower than 0.500 %, where the size of prior austenite grains in the microstructure is such that the crystal grain size number in accordance with ASTM E112-10 is less than 6.0, and the Vickers hardness is not higher than 250 Hv as measured between a position 1 mm away from the inner surface and a position 1 mm away from the outer surface.

WO 2017/018108 A1 describes a steel pipe for line pipe with a reduced hardness of the surface layer. This steel pipe for line pipe includes, in mass %, 0.02 to 0.11 % and other elements, where the microstructure contains tempered martensite and/or tempered bainite and further contains ferrite between the outer surface of the steel pipe and a position 1 mm away from the outer surface and/or between the inner surface of the steel pipe and a position 1 mm away from the inner surface.

WO 2018/020972 A1 describes a high-strength seamless steel pipe that can provide both high strength and low hardness in a stable manner while providing sufficient weldability. This high-strength seamless steel pipe includes, in mass %: 0.10 to 0.18 % C; 0.0005 to 0.005 % B; and other elements, and satisfies C+Si/30+(Mn+Cu+Cr)/20+Ni/60+Mo/15+V/10+5$\times$B $\leq$ 0.28.

PRIOR ART DOCUMENTS

PATENT DOCUMENTS

Patent Document 1: WO 2013/161567 A1
Patent Document 2: WO 2015/019708 A1
Patent Document 3: WO 2017/141341 A1
Patent Document 4: WO 2017/018108 A1
Patent Document 5: WO 2018/020972 A1

SUMMARY OF THE INVENTION

PROBLEMS TO BE SOLVED BY THE INVENTION

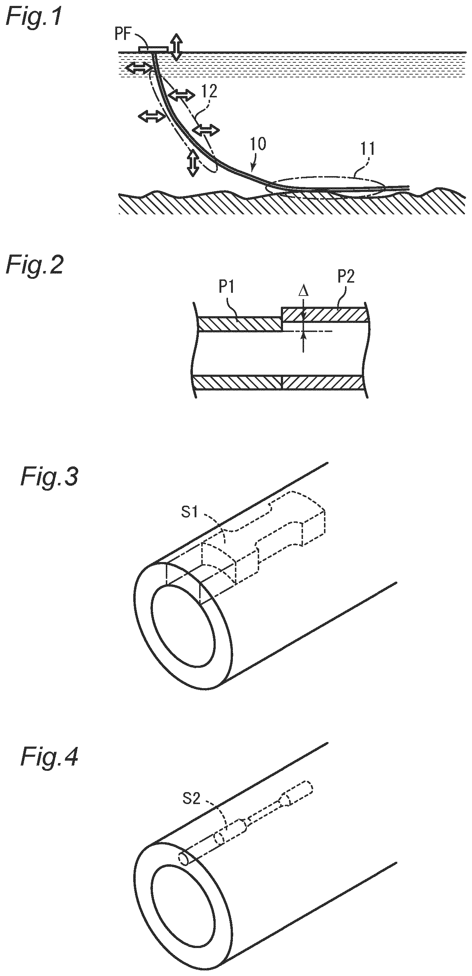

As the development of deepwater fields booms, floating-type platforms are increasingly utilized. FIG. 1 schematically illustrates deepwater field development using a floating-type platform. A line pipe 10 includes a flow line 11 installed along the topography of the seabed, and a riser 12 positioned to rise from the seabed toward a platform above the sea, PF. In the case of a development using a floating-type platform, the line pipe 10 constantly swings due to tides and waves. As such, particularly for the riser 12, it is important to provide sufficient fatigue properties at the girth welds.

When a line pipe is to be used, pipe ends of steel pipes are brought into abutment and then the portions in abutment are girth welded. FIG. 2 is a schematic cross-sectional view of pipe ends of a steel pipe P1 and a steel pipe P2 in abutment. As shown in FIG. 2, if there is an inner-diameter difference $\Delta$ between the pipe ends of the steel pipes P1 and P2, repetitive stresses after girth welding can easily cause fatigue cracking. Providing sufficient fatigue properties at the girth welds requires keeping the inner-diameter difference $\Delta$ small, i.e., ensuring that the inner diameter of the pipe ends of each as-produced steel pipe remains within a small tolerance.

To reduce the inner-diameter difference $\Delta$, pipe-end finishing may be performed, where the inner surfaces of the pipe ends are machined using an NC lathe (i.e., internal pipe-end machining or boring). Together with this, the outer surfaces of the pipe ends may also be machined. The machined steel pipe has experienced removal of an inner surface layer (in some cases, inner and outer surface layers). Any difference between the strength of the pipe as having its full wall thickness (i.e., of the as-produced pipe) and the strength of the pipe after machining represents a destabilizing factor for pipeline designing, and is not desirable. Meanwhile, the shipment tests required by the currently mainstream standards are intended for steel pipes with full wall thickness, and do not involve evaluation focusing on the strength of a pipe after machining.

An object of the present invention is to provide a seamless steel pipe with a reduced difference between the strength with full wall thickness and the strength after machining, and a method of manufacturing such a seamless steel pipe.

MEANS FOR SOLVING THE PROBLEMS

A seamless steel pipe according to one embodiment of the present invention has a chemical composition of, in mass %: 0.030 to 0.100 % C; 0.05 to 0.50 % Si; 0.30 to 1.70 % Mn; up to 0.020 % P; up to 0.0050 % S; 0.001 to 0.100 % Al; up to 0.0200 % N; 0.05 to 0.30 % Cr; 0.05 to 0.23 % Mo; 0.10 to 0.50 % Cu; 0.20 to 0.50 % Ni; 0.01 to 0.10 % V; 0 to 0.020 % Nb; 0 to 0.020 % Ti; 0 to 0.0005 % B; 0 to 0.0060 % Ca; and balance Fe and impurities, Fn1 represented by Expression (1) provided below being not less than 0.44, a crystal grain size number for a central portion as determined along a wall thickness in accordance with ASTM E112-13 (2021) being not less than 6.0, wherein, when quantitative analysis is conducted for elements V, Nb, Ti, Mo and Al by energy-dispersive X-ray spectrometry, each of NDos/NDc and NDis/NDc is not less than 0.60, where NDos is the number density of V-containing particles with an equivalent circle diameter of 10 to 100 nm as measured in a cross section perpendicular to a pipe-axis direction and at a depth of 2 mm from an outer surface of the steel pipe, V-containing particles defined as particles with a V content not lower than 30 mass %; NDis is the number density of V-containing particles with an equivalent circle diameter of 10 to 100 nm as measured at a depth of 2 mm from an inner surface of the steel pipe; and NDc is the number density of V-containing particles with an equivalent circle diameter of 10 to 100 nm as measured in a central portion as determined along the wall thickness,

$$\mathrm{Fn1 = C+Mn/6+(Cr+Mo+V)/5+(Cu+Ni)/15} \qquad (1),$$

where each chemical symbol for an element in Expression (1) is assigned the content of that element in mass %.

A method of manufacturing a seamless steel pipe according to another embodiment of the present invention is a method of manufacturing the above-described seamless steel pipe, including: preparing a hollow shell having the chemical composition; quenching the hollow shell; and tempering the quenched hollow shell, the quenching including: heating the hollow shell to a temperature not lower than 600 °C at an average rate of temperature increase not higher than 5 °C/min in a temperature range of 400 °C to 600 °C; heating the hollow shell to a holding temperature at an average rate of temperature increase not lower than 10 °C/min in a temperature range of 600 °C to the holding temperature, the holding temperature being a temperature not lower than the Ac$_3$ point; keeping the hollow shell at the holding temperature for a period of time not shorter than 10 minutes and not longer than 60 minutes; and cooling the hollow shell which has been held at the holding temperature.

EFFECTS OF THE INVENTION

The present invention provides a seamless steel pipe with a reduced difference between the strength with full wall thickness and the strength after machining.

BRIEF DESCRIPTION OF THE DRAWINGS

[FIG. 1] FIG. 1 schematically illustrates deepwater field development using a floating-type platform.

[FIG. 2] FIG. 2 is a schematic cross-sectional view of pipe ends of two steel pipes in abutment.

[FIG. 3] FIG. 3 schematically shows a position from which an arch-shaped test specimen is taken.

[FIG. 4] FIG. 4 schematically shows a position from which a round-bar test specimen is taken.

EMBODIMENTS FOR CARRYING OUT THE INVENTION

A seamless steel pipe is produced by producing a pipe and then subjecting it to heat treatment such as quenching and tempering. A steel pipe with large wall thickness (e.g., steel pipe with a wall thickness not smaller than 40.0 mm) is difficult to quench uniformly along the wall-thickness direction; as such, the microstructure of the central portion as determined along the wall thickness often has coarse grains. The Hall-Petsch law dictates that the coarse-grain microstructure has decreased yield strength, and thus the central portion along the wall thickness often has a decreased strength compared with portions near the inner and outer surfaces. This may result in differences between the strength with full wall thickness and the strength after machining.

Vanadium is an element that can dissolve in austenite to significantly contribute to improvements in hardenability. On the other hand, if vanadium remains in the steel in the form of particles of carbides (VC), for example (hereinafter referred to as "V-containing particles), its effect of improving hardenability is not produced. Thus, to provide a steel pipe with a microstructure that is uniform along the wall-thickness direction, it is effective to have V-containing particles dissolved uniformly across the entire wall thickness to provide a uniform distribution of V-containing particles along the wall-thickness direction. Specifically, it is effective if the ratio of the number density of V-containing particles near the inner/outer surfaces to the number density of V-containing particles in a central portion along the wall thickness is not lower than 0.60.

To have V-containing particles dissolved uniformly across the entire wall thickness, it is effective, during heating in quenching, to limit the average rate of temperature increase in the temperature range of 400 °C to 600 °C to 5 °C/min or lower. This provides sufficient preheat deep into the steel pipe's central portion along the wall thickness, thereby promoting uniform dissolution of V-containing particles during the subsequent temperature increase.

Another way to dissolve V-containing particles uniformly across the entire wall thickness may be to keep the steel pipe at a high temperature for a prolonged period of time. In such cases, however, austenite grains coarsen, making it difficult to achieve the required strength. The above-described method, which limits the rate of temperature increase in the temperature range of 400 °C to 600 °C, will provide a uniform distribution of V-containing particles along the wall-thickness direction while preventing austenite grains from coarsening.

The present invention was made based on the above-described discoveries. Now, a seamless steel pipe according to embodiments of the present invention and a method of manufacturing it will be described.

[Seamless Steel Pipe]

[Chemical Composition]

A seamless steel pipe according to the present embodiments has such a chemical composition as described below. In the following description, "%" for the content of an element means mass %.

C: 0.030 to 0.100 %

Carbon (C) increases the hardenability of steel. On the other hand, if C content is too high, the weldability of the steel decreases. In view of this, C content is to be 0.030 to 0.100 %. A lower limit for C content is preferably 0.040 %, more preferably 0.045 %, and yet more preferably 0.050 %. An upper limit for C content is preferably 0.098 %, more preferably 0.095 %, yet more preferably 0.090 %, and still more preferably 0.085 %.

Si: 0.05 to 0.50 %

Silicon (Si) deoxidizes steel. On the other hand, if Si content is too high, the toughness of the steel decreases. In view of this, Si content is to be 0.05 to 0.50 %. A lower limit for Si content is preferably 0.08 %, and more preferably 0.10 %. An upper limit for Si content is preferably 0.40 %, and more preferably 0.35 %.

Mn: 0.30 to 1.70 %

Manganese (Mn) increases the hardenability of steel. On the other hand, if Mn content is too high, the toughness of the steel decreases. In view of this, Mn content is to be 0.30 to 1.70 %. A lower limit for Mn content is preferably 0.50 %, more preferably 0.70 %, yet more preferably 0.90 %, still more preferably 1.00 %, and yet more preferably 1.10 %. An upper limit for Mn content is preferably 1.65 %, and more preferably 1.60 %.

P: up to 0.020 %

Phosphorus (P) is an impurity. P decreases the toughness of steel. In view of this, P content is to be not higher than 0.020 %. It is preferable to keep P content as low as possible. P content is preferably not higher than 0.018 %, and more preferably not higher than 0.015 %.

S: up to 0.0050 %

Sulfur (S) is an impurity. S decreases the toughness of steel. In view of this, S content is to be not higher than 0.0050 %. It is preferably to keep S content as low as possible. S content is preferably not higher than 0.0040 %, more preferably not higher than 0.0030 %, and yet more preferably not higher than 0.0020 %.

Al: 0.001 to 0.100 %

Aluminum (Al) deoxidizes steel. Al also forms fine precipitates to contribute to improvements in the toughness of the steel. On the other hand, if Al content is too high, the precipitates coarsen to decrease the toughness of the steel. In view of this, Al content is to be 0.001 to 0.100 %. A lower limit for Al content is preferably 0.005 %, more preferably 0.010 %, and yet more preferably 0.015 %. An upper limit for Al content is preferably 0.080 %, and more preferably 0.060 %. As used herein, Al means acid-soluble aluminum (sol. Al).

N: up to 0.0200 %

Nitrogen (N) is an impurity. If N content is too high, the toughness of the steel decreases. In view of this, N content is to be not higher than 0.0200 %. An upper limit for N content is preferably 0.0100 %, more preferably 0.0080 %, and yet more preferably 0.0060 %. On the other hand, excessively limiting N content increases costs. A lower limit for N content is preferably 0.0005 %, more preferably 0.0010 %, and yet more preferably 0.0020 %.

Cr: 0.05 to 0.30 %

Chromium (Cr) increases the hardenability and temper-softening resistance of steel. On the other hand, if Cr content is too high, the toughness and weldability of the steel decrease. In view of this, Cr content is to be 0.05 to 0.30 %. A lower limit for Cr content is preferably 0.08 %, more preferably 0.10 %, and yet more preferably 0.15 %. An upper limit for Cr content is preferably 0.28 %, and more preferably 0.25 %.

Mo: 0.05 to 0.23 %

Molybdenum (Mo) increases the hardenability of steel. On the other hand, if Mo content is too high, the weldability and toughness of the steel decrease. In view of this, Mo content is to be 0.05 to 0.23 %. A lower limit for Mo content is preferably 0.08 %, more preferably 0.10 %, and yet more preferably 0.12 %. An upper limit for Mo content is preferably 0.22 %, more preferably 0.20 %, and yet more preferably 0.18 %.

Cu: 0.10 to 0.50 %

Copper (Cu) increases the hardenability of steel. On the other hand, if Cu content is too high, the weldability and hot workability of the steel decrease. In view of this, Cu content is to be 0.10 to 0.50 %. A lower limit for Cu content is preferably 0.15 %, and more preferably 0.20 %. An upper limit for Cu content is preferably 0.45 %, and more preferably 0.40 %.

Ni: 0.20 to 0.50 %

Nickel (Ni) increases the hardenability and toughness of steel. On the other hand, if Ni content is too high, the sulfide stress corrosion cracking resistance of the steel decreases. In view of this, Ni content is to be 0.20 to 0.50 %. A lower limit for Ni content is preferably 0.22 %, and more preferably 0.25 %. An upper limit for Ni content is preferably 0.45 %, and more preferably 0.40 %.

V: 0.01 to 0.10 %

Vanadium (V) increases the hardenability of steel. V also has the effect of improving the strength of the steel as V precipitates in the form of fine carbides (VC). On the other hand, if V content is too high, the carbides coarsen to decrease the toughness of the steel. In view of this, V content is to be 0.01 to 0.10 %. A lower limit for V content is preferably 0.02 %, and more preferably 0.03 %. An upper limit for V content is preferably 0.07 %, more preferably 0.06 %, and yet more preferably 0.05 %.

The balance of the chemical composition of the seamless steel pipe according to the present embodiments is Fe and impurities. Impurity as used herein means an element originating from ore or scrap used as raw material for steel or an element that has entered from the environment or the like during the manufacturing process.

[Optional Elements]

In the chemical composition of the seamless steel pipe according to the present embodiments, part of the Fe may be replaced by one or more selected from the group consisting of sub-groups A, B and C discussed below. All of the elements discussed below are optional elements. In other words, the seamless steel pipe according to the present embodiments may not include all of these elements, and may include none of them.

[Sub-Group A]

Nb: 0 to 0.020 %; and
Ti: 0 to 0.020 %

[Sub-Group B]
B: 0 to 0.0005 %
[Sub-Group C]
Ca: 0 to 0.0060 %

[Sub-Group A] One or two selected from the group consisting of 0 to 0.020 % Nb and 0 to 0.020 % Ti

Niobium (Nb) and titanium (Ti) form fine precipitates to improve the toughness and strength of the steel. As such, one or both of Nb and Ti may be included as necessary. This effect is produced if a small amount of one of Nb and Ti is contained in the steel. On the other hand, if the contents of Nb and Ti are too high, the precipitates coarsen to decrease the toughness of the steel. In view of this, the content of each of Nb and Ti is to be not higher than 0.020 %.

A lower limit for Nb content is preferably 0.001 %, more preferably 0.002 %, yet more preferably 0.005 %, and still more preferably 0.010 %. An upper limit for Nb content is preferably 0.018 %, and more preferably 0.015 %.

A lower limit for Ti content is preferably 0.001 %, more preferably 0.002 %, and yet more preferably 0.004 %. An upper limit for Ti content is preferably 0.015 %, and more preferably 0.010 %.

[Sub-Group B] B: 0 to 0.0005 %

Boron (B) improves the hardenability of steel. As such, B may be included as necessary. This effect is produced if a small amount of B is contained in the steel. On the other hand, if B content is too high, the weldability of the steel decreases. In view of this, B content is to be not higher than 0.0005 %. A lower limit for B content is preferably 0.0001 %, and more preferably 0.0002 %. An upper limit for B content is preferably 0.0004 %, and more preferably 0.0003 %.

[Sub-Group C] Ca: 0 to 0.0060 %

Calcium (Ca) prevents formation of MnS to improve the toughness and hydrogen-induced cracking resistance of the steel. As such, Ca may be included as necessary. This effect is produced if a small amount of Ca is contained in the steel. On the other hand, if Ca content is too high, the index of cleanliness of the steel decreases, which decreases the toughness and hydrogen-induced cracking resistance of the steel. In view of this, Ca content is to be not higher than 0.0060 %. A lower limit for Ca content is preferably 0.0001 %, more preferably 0.0005 %, and yet more preferably 0.0010 %. An upper limit for Ca content is preferably 0.0055 %, more preferably 0.0050 %, and yet more preferably 0.0040 %.

[Explanation of Fn1]

In the seamless steel pipe according to the present embodiments, Fn1 represented by the following Expression (1) is not less than 0.44:

$$Fn1 = C+Mn/6+(Cr+Mo+V)/5+(Cu+Ni)/15 \qquad (1).$$

Each chemical symbol for an element in Expression (1) is assigned the content of that element in mass %.

Fn1 is a carbon equivalent, and is an index of the hardenability of steel. If Fn1 is too small, it is difficult to achieve a high-strength structure deep into the central portion along the wall thickness. In view of this, Fn1 is to be not less than 0.44. A lower limit for Fn1 is preferably 0.45, and more preferably 0.46. On the other hand, if Fn1 is too large, weldability may decrease. An upper limit for Fn1 is preferably 0.55, more preferably 0.50, and yet more preferably 0.48.

[Explanation of Fn2]

In the seamless steel pipe according to the present embodiments, Fn2 represented by the following Expression (2) is preferably not more than 0.070:

$$Fn2 = V+Ti+Nb \qquad (2).$$

Each chemical symbol for an element in Expression (2) is assigned the content of that element in mass %. If the relevant element is not contained in the steel, the symbol is assigned zero (0).

All of V, Ti and Nb are elements that form fine precipitates to increase the strength of the steel. If the contents of these elements are too high, this may make it difficult to keep the strength of the steel within the range of grade X65 in accordance with the API standards, and may also deteriorate the toughness of the steel after welding. In view of this, Fn2 is preferably not more than 0.070. An upper limit for Fn2 is more preferably 0.065, and yet more preferably 0.060. A lower limit for Fn2 is not limited to any particular value, and may be, for example, 0.020, preferably 0.025, more preferably 0.030, and yet more preferably 0.040.

[Microstructure]

In the seamless steel pipe according to the present embodiments, the crystal grain size number for the central portion along the wall thickness in accordance with ASTM E112-13(2021) is not less than 6.0. The larger the crystal grain size number, the smaller crystal grains are meant. If crystal grain size number is too small, the required strength is not achieved. Crystal grain size number is preferably not less than 6.5, more preferably not less than 7.0, and yet more preferably not less than 7.5. On the other hand, if crystal grain size number is too large, this may make it difficult to keep the strength of the steel within the range of grade X65 in accordance with the API standards. An upper limit for crystal grain size number is preferably 10.0, more preferably 9.5, yet more preferably 9.0, and still more preferably 8.5.

The seamless steel pipe according to the present embodiments preferably has a microstructure mainly composed of tempered martensite or bainite across the entire wall thickness. More specifically, the seamless steel pipe according to the present embodiments preferably has a microstructure with a volume fraction of tempered martensite or bainite not lower than 90 % both near the inner/outer surfaces and in the central portion along the wall thickness. The volume fraction of tempered martensite or bainite is more preferably not lower than 95 %.

In the seamless steel pipe according to the present embodiments, the ratio of the number density of V-containing particles near the inner/outer surfaces to the number density of V-containing particles in the central portion along the wall thickness is not lower than 0.60. More specifically, in the seamless steel pipe according to the present embodiments, when quantitative analysis is conducted for elements V, Nb, Ti, Mo and Al by energy-dispersive X-ray spectrometry, each of $NDos/NDc$ and $NDis/NDc$ is not less than 0.60, where $NDos$ is the number density of V-containing particles with equivalent circle diameters of 10 to 100 nm as measured in a cross section perpendicular to the pipe-axis direction and at a depth of 2 mm from the outer surface of the steel pipe, V-containing particles defined as particles with V contents not lower than 30 mass %; $NDis$ is the number density of V-containing particles with equivalent circle diameters of 10 to 100 nm as measured at a depth of 2 mm from the inner surface of the steel pipe; and $NDc$ is the number density of V-containing particles with equivalent circle diameters of 10 to 100 nm as measured in the central portion along the wall thickness.

Vanadium is an element that can dissolve in austenite to significantly contribute to improvements in hardenability. On the other hand, if vanadium remains in the steel in the form of particles of carbides (VC), for example, its effect of improving hardenability is not produced. Thus, to provide a steel pipe with a microstructure that is uniform along the wall-thickness direction, it is preferable to provide a uniform distribution of V-containing particles along the wall-thickness direction. A microstructure that is uniform along the wall-thickness direction is provided if each of $NDos/NDc$ and $NDis/NDc$ is not less than 0.60. A lower limit for each of $NDos/NDc$ and $NDis/NDc$ is preferably 0.65, more preferably 0.70, and yet more preferably 0.75. An upper limit for each of $NDos/NDc$ and $NDis/NDc$ is not limited to any particular value, and may be, for example, 1.50, preferably 1.20, more preferably 1.10, yet more preferably 1.05, and still more preferably 1.00.

Ndos, NDis and NDc are measured in the following manner.

Test specimens are taken from a steel pipe, one at a depth of 2 mm from its outer surface, another one at a depth of 2 mm from the inner surface, and yet another one in the central portion along the wall thickness. For each test specimen, a surface perpendicular to the pipe-axis direction of the steel pipe is designated as the surface to be observed, and the surface to be observed is mirror polished before being ultrasonically cleaned in methanol. The cleaned surface is covered with carbon-vapor-deposited film. The test specimen with its surface covered with deposited film is immersed in electrolytic solution at 20 °C (10 % acetylacetone - 1 % tetramethylammonium chloride - methanol solution), and electrolyzed for 10 minutes. The electrolysis is performed with a voltage of 100 mV and an amount of electrolysis of 10 C/cm². The deposited film is peeled off the electrolyzed test specimen. The deposited film obtained is cleaned with ethanol, then scooped with a sheet mesh, and dried.

This deposited film (i.e., replica film) is observed using a transmission electron microscope (TEM). Specifically, the deposited film is observed at a magnification of 20,000 with an accelerated voltage of 200 kV. Although the field(s) of view for observation is/are not limited to any particular size or number, the total area of the field(s) of view for observation is to be not smaller than 100 $\mu m^2$. For example, if a field of view for observation is 4.0 $\mu$m × 5.0 $\mu$m, the number of fields of view for observation is to be not less than 5 and the total area of the fields of view for observation is to be not smaller than 100 $\mu m^2$.

For each field of view for observation, the particles with equivalent circle diameters of 10 to 100 nm are identified. The particles can be identified from contrasts. As used herein, a "particle" is not limited to a circular (i.e., spherical) particle, and may be a small piece shaped to have angles, or may be a small piece having the shape of an elongated ellipse. Further, the equivalent circle diameter of the precipitates can be determined by conducting image analysis on the image being observed by TEM observation.

Point analysis is conducted on the identified particles by energy-dispersive X-ray spectrometry (EDS). The point analysis by EDS determines the contents of the elements contained in the particles. In the point analysis by EDS, the quantities of elements V, Nb, Ti, Mo and Al are determined with an accelerated voltage of 200 kV. Based on the results of EDS analyses for the particles with equivalent circle diameters not larger than 100 nm, the particles with V contents not lower than 30 % in mass % are identified as V-containing elements. That is, the particles where the ratio of the mass of V to the total mass of V, Nb, Ti, Mo and Al is not lower than 30 % are identified as V-containing particles.

The above-described analysis method excludes C from the set of elements for analysis, because the method uses replica test specimens and, in addition, C, which is a light element, is difficult to exactly analyze by EDS. As such, the above-described analysis method cannot exactly determine whether V-containing particles are carbides. On the other hand, in the chemical composition of the seamless steel pipe according to the present embodiments, almost all of the V-containing particles identified in the above-discussed manner under the condition that the equivalent circle diameter must be not larger than 100 nm are assumed to be carbides of V (VC) or composite carbides.

Based on the total number of V-containing particles identified in each field of view for observation and the total area of the field of views for observation, the number density of V-containing particles (/$\mu m^2$) is determined. According to the present embodiments, the number density of V-containing particles is rounded off to the nearest whole number.

The equivalent circle diameter of V-containing particles present in the steel pipe is preferably not larger than 100 nm. That is, it is preferable that no V-containing particles with equivalent circle diameters exceeding 100 nm are present in the steel pipe.

[Mechanical and Other Properties]

In the seamless steel pipe according to the present embodiments, the yield strength measured by tensile testing in the pipe-axis direction (hereinafter referred to as "L-direction tensile testing") using a round-bar test specimen taken from a central portion along the wall thickness (with a parallel-portion diameter of 12.7 mm and a gauge length of 50.8 mm; such a test specimen will be hereinafter referred to as "round-bar test specimen with a parallel-portion diameter of 12.7 mm") as specified in ASTM E8/E8M-21 is preferably not lower than 450 MPa. The yield strength is determined by the 0.5 % total elongation method.

FIGS. 3 and 4 schematically indicate positions from which an arch-shaped test specimen and a round-bar test specimen, respectively, are taken. In a thick-walled steel pipe, a central portion along the wall thickness can easily experience coarsening of the grains of the microstructure, and thus has a lower strength than portions near the inner/outer surfaces. As such, there may be a difference between the strength measured using an arch-shaped test specimen with full wall thickness S1 (FIG. 3) and the strength measured using a round-bar test specimen S2 taken from a central portion along the wall thickness (FIG. 4). According to the present embodiments, the mechanical properties of the seamless steel pipe are evaluated based on strengths (i.e., yield strength and tensile strength) measured by L-direction tensile testing using in a round-bar test specimen with a parallel-portion diameter of 12.7 mm taken from a central portion along the wall thickness. In the following description, the terms "yield strength" and "tensile strength" without any definition are intended to mean a yield strength and a tensile strength, respectively, measured using such a round-bar test specimen.

A lower limit for yield strength is more preferably 480 MPa, and yet more preferably 500 MPa. In some cases, a strength that is too high is not preferable because this would increase costs for weld materials used to provide an overmatched joint. An upper limit for yield strength is preferably 600 MPa, more preferably 580 MPa, and yet more preferably 560 MPa.

In the seamless steel pipe according to the present embodiments, tensile strength is preferably not lower than 535 MPa. A lower limit for tensile strength is more preferably 550 MPa, and yet more preferably 580 MPa. An upper limit for tensile strength is preferably 760 MPa, more preferably 700 MPa, and yet more preferably 650 MPa.

In the seamless steel pipe according to the present embodiments, yield ratio (i.e., yield strength divided by tensile strength) is preferably 0.80 to 0.95. A lower limit for yield ratio is more preferably 0.83, and yet more preferably than 0.85. An upper limit for yield ratio is more preferably 0.92, and yet more preferably 0.90.

In the seamless steel pipe according to the present embodiments, the difference between the yield strength measured by L-direction tensile testing using an arch-shaped test specimen with full wall thickness as specified in ASTM E8/E8M-21 (with a width of 38.1 mm and a gauge length of 50.8 mm) and the yield strength measured by L-direction tensile testing using a round-bar test specimen with a parallel-portion diameter of 12.7 mm taken from a central portion along the wall thickness (hereinafter referred to as "difference in measured strength due to specimen shapes) is preferably not larger than 10 MPa.

As discussed above, in a thick-walled steel pipe, a central portion along the wall thickness can easily experience coarsening of the grains of the microstructure, and thus has a lower strength than portions near the inner/outer surfaces. According to the present embodiments, the difference in measured strength due to specimen shapes is used as an index of microstructure uniformity along the wall-thickness direction. That is, in the evaluation, the smaller the difference in measured strength due to specimen shapes, the more uniform microstructure along the wall-thickness direction is determined to have been provided. The difference in measured strength due to specimen shapes is more preferably not larger than 8 MPa, yet more preferably not larger than 7 MPa, and still more preferably not larger than 5 MPa.

The seamless steel pipe according to the present embodiments may be a seamless steel pipe for line pipe. The seamless steel pipe according to the present embodiments is particularly suitable for use as a seamless steel pipe for line pipe.

The seamless steel pipe according to the present embodiments preferably has a wall thickness not smaller than 40.0 mm. A lower limit for wall thickness is more preferably 41.0 mm, yet more preferably 42.0 mm, still more preferably 43.0 mm, and yet more preferably 45.0 mm. An upper limit for wall thickness is not limited to any particular value, and may be, for example, 55.0 mm, preferably 52.0 mm, and more preferably 50.0 mm.

[Method of Manufacturing Seamless Steel Pipe]

An exemplary method of manufacturing a seamless steel pipe according to the present embodiments will be described. A method of manufacturing a seamless steel pipe according to one embodiment of the present invention includes the steps of: preparing a hollow shell having such a chemical composition as described above; quenching the hollow shell; and tempering the quenched hollow shell.

A hollow shell for seamless steel pipe having such a chemical composition as described above is prepared.

The hollow shell for seamless steel pipe may be produced, for example, by hot working an ingot, a slab, or a bloom to produce a billet, or producing a billet through continuous casting, and then hot working such a billet. The hot working of the billet may be, for example, piercing-rolling by the Mannesmann method, hot extrusion, hot forging or hot rolling.

During production of the hollow shell for seamless steel pipe, a heat treatment called "direct quenching" may be performed, where the hot pipe after hot pipe making is rapidly cooled (e.g., water cooled). The manufacturing method according to the present embodiments is applicable to both a hollow shell that has undergone direct quenching and a hollow shell that has not undergone direct quenching. However, it is difficult to obtain a microstructure with fine grains and uniform along the wall-thickness direction using direct quenching alone. As such, according to the present embodiments, even if the hollow shell has undergone direct quenching, a separate quenching step, described below, must be performed.

The hollow shell is quenched. Specifically, the hollow shell is heated to a holding temperature in the austenite temperature range, and held at the holding temperature for a predetermined holding time before being cooled.

More specifically, the quenching step includes the sub-steps of: heating the hollow shell to a temperature not lower than 600 °C at an average rate of temperature increase not higher than 5 °C/min in the temperature range of 400 °C to 600 °C; heating the hollow shell to a holding temperature at an average rate of temperature increase not lower than 10 °C/min in the temperature range of 600 °C to the holding temperature, the holding temperature being a temperature not lower than the $Ac_3$ point; holding the hollow shell at the holding temperature for a period of time not shorter than 10 minutes and not longer than 60 minutes; and cooling the hollow shell which has been held at the holding temperature.

The average rate of temperature increase in the temperature range from 400 °C to 600 °C (hereinafter referred to as "first rate of temperature increase") is to be not higher than 5 °C/min. Reducing the first rate of temperature increase achieves sufficient preheat deep into the steel pipe's central portion along the wall thickness, thereby promoting uniform dissolution of V-containing particles during the subsequent temperature increase. The rate of temperature increase during this may not be constant; it is sufficient if the average rate of temperature increase is not higher than 5 °C/min. The first rate of temperature increase is preferably not higher than 4 °C/min. For the temperature range up to 400 °C, any rate of temperature increase can be used.

The hollow shell which has been heated to the temperature not lower than 600 °C is heated to a holding temperature, which is a temperature not lower than the Ac$_3$ point. A lower limit for holding temperature is preferably 900 °C, and more preferably 920 °C. An upper limit for holding temperature is preferably 1100 °C, and more preferably 1050 °C.

The average rate of temperature increase in the temperature range from 600 °C to the holding temperature (hereinafter referred to as "second rate of temperature increase") is to be not lower than 10 °C/min. If the second rate of temperature increase is too low, the crystal grains may coarsen during temperature increase.

The time for which the hollow shell is held at the holding temperature is to be not shorter than 10 minutes and not longer than 60 minutes. If the holding time is too short, the V-containing particles do not sufficiently dissolve. On the other hand, if the holding time is too long, the crystal grains coarsen. An upper limit for holding time is preferably 50 minutes, and more preferably 40 minutes. A lower limit for holding time is preferably 15 minutes, and more preferably 20 minutes.

The hollow shell which has been held at the holding temperature for a predetermined period of time is cooled from the holding temperature. Preferably, this cooling is water cooling. This cooling is preferably performed at a sufficiently high cooling rate for causing the microstructure deep into the hollow shell's central portion along the wall thickness to change to a quenched structure (martensite or bainite).

The quenched hollow shell is tempered. Specifically, the quenched hollow shell is heated to a predetermined temperature and held for a predetermined tempering time.

The tempering is preferably performed such that LMP represented by the following Expression (3) is 18200 to 19000:

$$\mathrm{LMP} = (\mathrm{T}+273)\times(20+\log(\mathrm{t})) \qquad (3).$$

In Expression (3), $T$ is the tempering temperature (in °C), and $t$ is the holding time at the tempering temperature (in hours). $\log(t)$ is the logarithm of $t$ to the base 10.

A lower limit for LMP is more preferably 18800, yet more preferably 18820, and still more preferably 18850. An upper limit for LMP is more preferably 18950, and yet more preferably 18900.

The tempering temperature is preferably not higher than the Ac$_1$ point. An upper limit for tempering temperature is more preferably 700 °C, and more preferably 680 °C. A lower limit for tempering temperature is preferably 550 °C, and more preferably 600 °C.

An upper limit for the holding time at the tempering temperature is preferably 180 minutes, more preferably 160 minutes, and yet more preferably 140 minutes. A lower limit for the holding time at the tempering temperature is preferably 90 minutes, more preferably 100 minutes, and yet more preferably 110 minutes.

Preferably, the cooling after holding is air cooling.

These steps result in a seamless steel pipe.

A seamless steel pipe according to embodiments of the present invention and a method of manufacturing such a pipe have been described. The present embodiments provide a seamless steel pipe with a reduced difference between the strength with full wall thickness and the strength after machining.

EXAMPLES

Now, the present invention will be described more specifically with reference to examples. The present invention is not limited to these examples.

Steels having the chemical compositions of steel designations A to Y shown in Table 1 were smelted and were subjected to continuous casting to produce round billets.

[Table 1]

TABLE 1

| Steel desig. | Chemical (in mass %, Fe and impurities) | | | | | | | | | | | | | | | |
|---|---|---|---|---|---|---|---|---|---|---|---|---|---|---|---|---|
| | C | Si | Mn | P | S | Al | N | Cr | Mo | Cu | Ni | V | Ti | Nb | B | Ca |
| A | 0.070 | 0.21 | 1.48 | 0.013 | 0.0020 | 0.034 | 0.0051 | 0.24 | 0.17 | 0.27 | 0.25 | 0.05 | - | - | - | - |
| B | 0.063 | 0.13 | 1.56 | 0.015 | 0.0017 | 0.028 | 0.0040 | 0.28 | 0.20 | 0.24 | 0.30 | 0.04 | - | - | - | - |
| C | 0.045 | 0.24 | 1.68 | 0.009 | 0.0017 | 0.036 | 0.0034 | 0.25 | 0.08 | 0.30 | 0.35 | 0.06 | 0.004 | - | - | - |
| D | 0.075 | 0.23 | 1.54 | 0.008 | 0.0018 | 0.042 | 0.0052 | 0.17 | 0.17 | 0.38 | 0.45 | 0.08 | - | 0.010 | - | - |
| E | 0.053 | 0.15 | 1.46 | 0.009 | 0.0017 | 0.030 | 0.0034 | 0.20 | 0.20 | 0.45 | 0.48 | 0.05 | - | - | 0.0001 | - |
| F | 0.065 | 0.27 | 1.35 | 0.008 | 0.0019 | 0.038 | 0.0043 | 0.29 | 0.21 | 0.43 | 0.38 | 0.02 | 0.005 | 0.019 | - | - |
| G | 0.080 | 0.31 | 1.60 | 0.009 | 0.0015 | 0.050 | 0.0033 | 0.27 | 0.10 | 0.40 | 0.20 | 0.03 | 0.005 | - | - | 0.0008 |
| H | 0.064 | 0.21 | 1.38 | 0.012 | 0.0017 | 0.021 | 0.0044 | 0.30 | 0.22 | 0.35 | 0.23 | 0.05 | - | - | 0.0001 | 0.0019 |
| I | 0.083 | 0.32 | 1.68 | 0.012 | 0.0017 | 0.023 | 0.0042 | 0.13 | 0.18 | 0.23 | 0.25 | 0.04 | 0.010 | - | - | 0.0055 |
| J | 0.059 | 0.30 | 1.47 | 0.014 | 0.0019 | 0.043 | 0.0031 | 0.25 | 0.16 | 0.35 | 0.35 | 0.05 | - | - | - | - |
| K | 0.063 | 0.14 | 1.56 | 0.009 | 0.0014 | 0.035 | 0.0035 | 0.11 | 0.23 | 0.29 | 0.31 | 0.05 | 0.004 | - | 0.0001 | - |
| L | 0.060 | 0.28 | 1.49 | 0.012 | 0.0022 | 0.045 | 0.0035 | 0.23 | 0.17 | 0.32 | 0.34 | 0.04 | - | - | - | - |
| M | 0.064 | 0.16 | 1.59 | 0.010 | 0.0015 | 0.038 | 0.0031 | 0.14 | 0.21 | 0.28 | 0.38 | 0.05 | 0.003 | - | 0.0001 | - |
| N | 0.073 | 0.29 | 1.43 | 0.014 | 0.0013 | 0.039 | 0.0043 | 0.23 | 0.22 | 0.34 | 0.40 | 0.06 | - | - | - | - |
| O | 0.082 | 0.21 | 1.60 | 0.008 | 0.0016 | 0.054 | 0.0035 | 0.09 | 0.19 | 0.20 | 0.35 | 0.04 | 0.004 | - | 0.0002 | - |
| P | 0.084 | 0.25 | 1.13 | 0.008 | 0.0014 | 0.034 | 0.0032 | 0.29 | 0.21 | 0.45 | 0.45 | 0.06 | - | - | - | 0.0030 |
| Q | 0.062 | 0.13 | 1.53 | 0.010 | 0.0016 | 0.043 | 0.0038 | 0.18 | 0.09 | 0.32 | 0.21 | 0.03 | - | - | - | - |
| R | 0.041 | 0.12 | 1.51 | 0.009 | 0.0010 | 0.032 | 0.0040 | 0.21 | 0.21 | 0.23 | 0.21 | 0.05 | 0.012 | - | - | 0.0010 |
| S | 0.070 | 0.28 | 1.47 | 0.011 | 0.0015 | 0.036 | 0.0049 | 0.25 | 0.20 | 0.30 | 0.35 | - | - | - | - | - |
| T | 0.070 | 0.22 | 1.50 | 0.013 | 0.0019 | 0.032 | 0.0047 | 0.25 | 0.17 | 0.25 | 0.25 | 0.05 | - | - | - | - |
| U | 0.060 | 0.13 | 1.55 | 0.012 | 0.0017 | 0.034 | 0.0034 | 0.21 | 0.21 | 0.24 | 0.25 | 0.05 | 0.005 | - | - | - |
| V | 0.075 | 0.23 | 1.48 | 0.011 | 0.0015 | 0.041 | 0.0035 | 0.20 | 0.15 | 0.29 | 0.35 | 0.04 | - | - | - | - |
| W | 0.063 | 0.28 | 1.32 | 0.008 | 0.0019 | 0.030 | 0.0042 | 0.29 | 0.21 | 0.42 | 0.39 | 0.02 | 0.005 | 0.018 | - | - |
| X | 0.085 | 0.13 | 1.24 | 0.014 | 0.0017 | 0.038 | 0.0041 | 0.28 | 0.21 | 0.25 | 0.30 | 0.05 | - | -- | - | - |

| Steel desig. | Chemical (in mass %, Fe and impurities) | | | | | | | | | | | | | | | |
|---|---|---|---|---|---|---|---|---|---|---|---|---|---|---|---|---|
| | C | Si | Mn | P | S | Al | N | Cr | Mo | Cu | Ni | V | Ti | Nb | B | Ca |
| Y | 0.072 | 0.23 | 1.52 | 0.013 | 0.0020 | 0.034 | 0.0064 | 0.24 | 0.19 | 0.15 | 0.23 | 0.05 | - | - | - | - |

The resulting round billets were subjected to piercing-rolling to produce hollow shells for seamless steel pipe with the corresponding outer diameters (OD) and wall thicknesses (WT) shown in Table 2. The hollow shells were subjected to quenching and tempering under the relevant conditions shown in Table 2 to produce steel pipes labeled Test Nos. 1 to 25.

TABLE 2

| Test No. | Steel desig. | Chemical composition | | Steel pipe size | | Quenching | | | | | Terapering | | |
|---|---|---|---|---|---|---|---|---|---|---|---|---|---|
| | | Fnl | Fn2 | OD (mm) | WT (mm) | R1 (°C/min) | R2 (°C/min) | Holding temp. (°C) | Holding time (min) | | Temp. (°C) | Holding time (min) | LMP |
| 1 | A | 0.44 | 0.050 | 323.9 | 44.5 | 4 | 10 | 950 | 15 | | 653 | 135 | 18846 |
| 2 | B | 0.46 | 0.040 | 406.4 | 40.0 | 5 | 14 | 950 | 18 | | 658 | 120 | 18900 |
| 3 | C | 0.45 | 0.064 | 273.1 | 48.3 | 4 | 10 | 950 | 30 | | 655 | 130 | 18872 |
| 4 | D | 0.46 | 0.040 | 323.9 | 4.3.7 | 4 | 14 | 950 | 17 | | 660 | 111 | 18909 |
| 5 | E | 0.45 | 0.050 | 273.1 | 48.3 | 5 | 10 | 950 | 49 | | 655 | 135 | 18887 |
| 6 | F | 0.45 | 0.044 | 273.1 | 41.9 | 3 | 10 | 950 | 11 | | 655 | 135 | 18887 |
| 7 | G | 0.47 | 0.035 | 273.1 | 48.3 | 3 | 13 | 950 | 16 | | 655 | 139 | 18899 |
| 8 | H | 0.45 | 0.050 | 273.1 | 43.7 | 4 | 10 | 950 | 15 | | 650 | 140 | 18800 |
| 9 | I | 0.47 | 0.050 | 323.9 | 44.5 | 5 | 10 | 950 | 35 | | 653 | 130 | 18831 |
| 10 | J | 0.44 | 0.050 | 323.9 | 44.5 | 7 | 10 | 950 | 39 | | 657 | 130 | 18912 |
| 11 | K | 0.44 | 0.054 | 273.1 | 48.3 | 8 | 10 | 950 | 50 | | 658 | 121 | 18904 |
| 12 | L | 0.44 | 0.040 | 323.9 | 44.5 | 7 | 10 | 950 | 37 | | 652 | 130 | 18811 |
| 13 | M | 0.45 | 0.053 | 273.1 | 48.3 | 10 | 10 | 950 | 28 | | 653 | 125 | 18815 |
| 14 | N | 0.46 | 0.060 | 323.9 | 44.5 | 4 | 11 | 950 | 75 | | 625 | 125 | 18246 |
| 15 | O | 0.45 | 0.044 | 273.1 | 48.3 | 4 | 10 | 950 | 80 | | 630 | 136 | 18381 |
| 16 | P | 0.44 | 0.060 | 273.1 | 48.3 | 3 | 10 | 950 | 85 | | 630 | 116 | 18319 |
| 17 | Q | 0.41 | 0.030 | 273.1 | 41.9 | 5 | 10 | 950 | 20 | | 660 | 122 | 18948 |
| 18 | R | 0.42 | 0.062 | 323.9 | 44.5 | 4 | 10 | 950 | 14 | | 655 | 118 | 18833 |
| 19 | S | 0.45 | 0.000 | 323.9 | 48.0 | 4 | 10 | 950 | 35 | | 648 | 120 | 18697 |
| 20 | T | 0.45 | 0.050 | 323.9 | 44.5 | 4 | 14 | 950 | 7 | | 654 | 132 | 18857 |
| 21 | U | 0.45 | 0.055 | 406.4 | 46.5 | 5 | 10 | 950 | 8 | | 656 | 124 | 18873 |
| 22 | V | 0.44 | 0.040 | 406.4 | 48.3 | 5 | 6 | 950 | 38 | | 655 | 131 | 18875 |
| 23 | W | 0.44 | 0.043 | 273.1 | 41.9 | 5 | 6 | 950 | 35 | | 654 | 132 | 18857 |

(continued)

| Test No. | Steel desig. | Chemical composition | | Steel pipe size | | Quenching | | | | Tempering | | |
|---|---|---|---|---|---|---|---|---|---|---|---|---|
| | | Fn1 | Fn2 | OD (mm) | WT (mm) | R1 (°C/min) | R2 (°C/min) | Holding temp. (°C) | Holding time (min) | Temp. (°C) | Holding time (min) | LMP |
| 24 | X | 0.44 | 0.050 | 273.1 | 48.3 | 4 | 12 | 950 | 19 | 657 | 125 | 18896 |
| 25 | Y | 0.45 | 0.050 | 323.9 | 44.5 | 5 | 10 | 950 | 25 | 655 | 126 | 18859 |

Fn1 = C+Mn/6+(Cr+Mo+V)/5+(Cu+Ni)/15
Fn2 = V+Ti+Nb

"R1" in Tables 2 indicates the first rate of temperature increases, i.e., the average rate of temperature increase in the temperature range of 400 °C to 600 °C during heating for quenching. "R2" in Table 2 indicates the second rate of temperature increase, i.e., the average rate of temperature increase in the temperature range of 600 °C to the holding temperature during heating for quenching.

[Microstructure Observation]

The crystal grain size number of each steel pipe was measured at a central portion along the wall thickness. Specifically, a test specimen was taken from the steel pipe after quenching and before tempering such that a cut surface perpendicular to the pipe-axis direction of the steel pipe could serve as the test surface. The test specimen taken was embedded in resin, and the Bechet-Beaujard method was used where the specimen was etched by picric acid-saturated aqueous solution to reveal prior austenite grain boundaries, and the crystal grain size number of the prior austenite grains was measured in accordance with ASTM E112-13 (2021).

For each steel pipe, NDos, NDis NDc as well as their ratios (NDos/NDc and NDis/NDc) were calculated by the method discussed above. No V-containing grains with equivalent circle diameters exceeding 100 nm were observed in any of the steel pipes.

The results of the microstructure observations are shown in Table 3. Each steel pipe, both near the inner/outer surfaces and in the central portion along the wall thickness, had a microstructure with a volume fraction of bainite (i.e., bainite which has undergone tempering) not lower than 90 %. The volume fraction of a microstructure was measured in the following manner: First, a test specimen was taken such that a cut surface perpendicular to the pipe-axis direction could serve as the test surface, and etched by nital etching solution to reveal the microstructure. Thereafter, optical photo-micrographs, 500 $\mu$m $\times$ 500 $\mu$m each, were taken, where the center of the field of view was positioned at a depth of 2 mm from each of the inner and outer surfaces of the steel pipe and in a central portion along the wall thickness. On each of the microstructure photographs, vertical and horizontal straight lines were drawn with a pitch of 25 $\mu$m, and the number of intersection points on ferrite structure was counted. The number of intersection points on ferrite structure was subtracted from the total number of intersection points, and the remainder expressed as a percentage was treated as the volume fraction of bainite (i.e., bainite which has undergone tempering) for that particular microstructure photograph (the volume fraction was assumed to be equal to the area fraction).

[Table 3]

TABLE 3

| Test No. | Steel desig. | Number density of VC (/$\mu$m$^2$) | | | Ratio | | Crystal grain size number |
|---|---|---|---|---|---|---|---|
| | | NDos | NDis | NDc | NDos /NDc | NDis /NDc | |
| 1 | A | 23 | 20 | 30 | 0.77 | 0.67 | 8.1 |
| 2 | B | 23 | 18 | 27 | 0.85 | 0.67 | 8.2 |
| 3 | C | 19 | 23 | 30 | 0.63 | 0.77 | 8.0 |
| 4 | D | 19 | 20 | 21 | 0.90 | 0.95 | 7.9 |
| 5 | E | 23 | 28 | 21 | 1.10 | 1.33 | 8.5 |
| 6 | F | 31 | 26 | 27 | 1.15 | 0.96 | 8.3 |
| 7 | G | 19 | 32 | 25 | 0.76 | 1.28 | 7.9 |
| 8 | H | 19 | 24 | 31 | 0.61 | 0.77 | 8.5 |
| 9 | I | 28 | 21 | 21 | 1.33 | 1.00 | 8.5 |
| 10 | J | 25 | 26 | 57 | 0.44 | 0.46 | 6.5 |
| 11 | K | 31 | 18 | 58 | 0.53 | 0.31 | 6.3 |
| 12 | L | 19 | 19 | 59 | 0.32 | 0.32 | 6.4 |
| 13 | M | 19 | 25 | 51 | 0.37 | 0.49 | 6.8 |
| 14 | N | 30 | 24 | 25 | 1.20 | 0.96 | 5.5 |
| 15 | O | 27 | 25 | 24 | 1.13 | 1.04 | 5.6 |

(continued)

| Test No. | Steel desig. | Number density of VC (/μm²) | | | Ratio | | Crystal grain size number |
|---|---|---|---|---|---|---|---|
| | | NDos | NDis | NDc | NDos /NDc | NDis /NDc | |
| 16 | P | 25 | 25 | 19 | 1.32 | 1.32 | 5.4 |
| 17 | Q | 29 | 31 | 19 | 1.53 | 1.63 | 6.3 |
| 18 | R | 22 | 20 | 18 | 1.22 | 1.11 | 6.5 |
| 19 | S | - | - | - | - | - | 6.2 |
| 20 | T | 19 | 20 | 38 | 0.50 | 0.53 | 6.0 |
| 21 | U | 18 | 21 | 47 | 0.38 | 0.45 | 6.1 |
| 22 | V | 26 | 30 | 29 | 0.90 | 1.03 | 5.6 |
| 23 | W | 28 | 28 | 26 | 1.08 | 1.08 | 5.4 |
| 24 | X | 22 | 19 | 27 | 0.81 | 0.70 | 7.8 |
| 25 | Y | 24 | 22 | 30 | 0.80 | 0.73 | 8.0 |

From each steel pipe, an arch-shaped test specimen with full wall thickness as specified by ASTM E8/E8M-21 (with a width of 38.1 mm and a gauge length of 50.8 mm) and a round-bar test specimen as specified by ASTM E8/E8M-21 (with a parallel-portion diameter of 12.7 mm and a gauge length of 50.8 mm) were taken, where the longitudinal direction of the specimen was parallel to the pipe axis. These test specimens were used to conduct L-direction tensile testing. Yield strength (YS), tensile strength (TS) and yield ratio (YR) are shown in Table 4.

[Table 4]

TABLE 4

| Test No. | Steel desig. | YS (MPa) | | | TS (MPa) | | YR | |
|---|---|---|---|---|---|---|---|---|
| | | Arch-shaped | Round bar | Diff. | Arch-shaped | Round bar | Arch-shaped | Round bar |
| 1 | A | 496 | 488 | 8 | 589 | 586 | 0.84 | 0.83 |
| 2 | B | 502 | 499 | 3 | 595 | 589 | 0.84 | 0.85 |
| 3 | C | 498 | 493 | 5 | 589 | 579 | 0.85 | 0.85 |
| 4 | D | 510 | 502 | 8 | 600 | 589 | 0.85 | 0.85 |
| 5 | E | 503 | 496 | 7 | 594 | 580 | 0.85 | 0.86 |
| 6 | F | 514 | 507 | 7 | 596 | 595 | 0.86 | 0.85 |
| 7 | G | 499 | 491 | 8 | 587 | 578 | 0.85 | 0.85 |
| 8 | H | 512 | 508 | 4 | 594 | 595 | 0.86 | 0.85 |
| 9 | I | 512 | 504 | 8 | 598 | 593 | 0.86 | 0.85 |
| 10 | J | 490 | 475 | 15 | 551 | 543 | 0.89 | 0.87 |
| 11 | K | 505 | 483 | 22 | 580 | 555 | 0.87 | 0.87 |
| 12 | L | 515 | 502 | 13 | 579 | 564 | 0.89 | 0.89 |
| 13 | M | 511 | 496 | 15 | 574 | 557 | 0.89 | 0.89 |
| 14 | N | 447 | 440 | 7 | 545 | 537 | 0.82 | 0.82 |
| 15 | O | 443 | 438 | 5 | 534 | 532 | 0.83 | 0.82 |
| 16 | P | 446 | 442 | 4 | 537 | 533 | 0.83 | 0.83 |
| 17 | Q | 445 | 438 | 7 | 534 | 530 | 0.83 | 0.83 |

(continued)

| Test No. | Steel desig. | YS (MPa) | | | TS (MPa) | | YR | |
|---|---|---|---|---|---|---|---|---|
| | | Arch-shaped | Round bar | Diff. | Arch-shaped | Round bar | Arch-shaped | Round bar |
| 18 | R | 448 | 443 | 5 | 533 | 528 | 0.84 | 0.84 |
| 19 | S | 444 | 435 | 9 | 532 | 530 | 0.83 | 0.82 |
| 20 | T | 504 | 490 | 14 | 576 | 566 | 0.88 | 0.87 |
| 21 | U | 496 | 481 | 15 | 584 | 570 | 0.85 | 0.84 |
| 22 | V | 445 | 440 | 8 | 533 | 528 | 0.83 | 0.83 |
| 23 | W | 440 | 438 | 2 | 530 | 526 | 0.83 | 0.83 |
| 24 | X | 488 | 485 | 3 | 574 | 570 | 0.85 | 0.85 |
| 25 | Y | 498 | 491 | 7 | 581 | 577 | 0.86 | 0.85 |

As shown in Tables 1 to 4, for each of the steel pipes labeled Test Nos. 1 to 9, 24 and 25, Fn1 was not less than 0.44, each of NDos/NDc and NDis/NDc was not less than 0.60, and the crystal grain size number for the central portion along the wall thickness was not less than 6.0. For each of these steel pipes, the yield strength was not lower than 450 MPa, and the difference in measured strength due to specimen shapes was not larger than 10 MPa.

For each of the steel pipes labeled Test Nos. 10 to 13, the difference in measured strength due to specimen shapes was larger than 10 MPa. For these steel pipes, each of NDos/NDc and NDis/NDc was less than 0.60, suggesting that the microstructure was not uniform along the wall-thickness direction. NDos/NDc and NDis/NDc were less than 0.60 presumably because the first rate of temperature increase was too high.

For each of the steel pipes labeled Test Nos. 14 to 16, the yield strength was lower than 450 MPa. This is presumably because the microstructure of the steel pipe had coarse grains. The microstructure had coarse grains presumably because the holding time for quenching was too long.

For each of the steel pipes labeled Test Nos. 17 and 18, the yield strength was lower than 450 MPa. This is presumably because the value of Fn1 was too small.

For the steel pipe labeled Test No. 19, the yield strength was lower than 450 MPa. This is presumably because the V content was too low.

For each of the steel pipes labeled Test Nos. 20 and 21, the difference in measured strength due to specimen shapes was larger than 10 MPa. For these steel pipes, each of NDos/NDc and NDis/NDc was less than 0.60, suggesting that the microstructure was not uniform along the wall-thickness direction. NDos/NDc and NDis/NDc were less than 0.60 presumably because the holding time for quenching was too short.

For each of the steel pipes labeled Test Nos. 22 and 23, the yield strength was lower than 450 MPa. This is presumably because the microstructure of the steel pipe had coarse grains. The microstructure had coarse grains presumably because the second rate of temperature increase was too low.

Embodiments of the present invention have been described. The above-described embodiments are merely illustrative examples useful for carrying out the present invention. Thus, the present invention is not limited to the above-described embodiments, and the above-described embodiments, when carried out, may be modified as appropriate within the scope of the invention.

**Claims**

1.   A seamless steel pipe having a chemical composition of, in mass %:

0.030 to 0.100 % C;
0.05 to 0.50 % Si;
0.30 to 1.70 % Mn;
up to 0.020 % P;
up to 0.0050 % S;
0.001 to 0.100 % Al;
up to 0.0200 % N;
0.05 to 0.30 % Cr;
0.05 to 0.23 % Mo;

0.10 to 0.50 % Cu;

0.20 to 0.50 % Ni;

0.01 to 0.10 % V;

0 to 0.020 % Nb;

0 to 0.020 % Ti;

0 to 0.0005 % B;

0 to 0.0060 % Ca; and

balance Fe and impurities,

Fn1 represented by Expression (1) provided below being not less than 0.44,

a crystal grain size number for a central portion as determined along a wall thickness in accordance with ASTM E112-13 (2021) being not less than 6.0,

wherein, when quantitative analysis is conducted for elements V, Nb, Ti, Mo and Al by energy-dispersive X-ray spectrometry, each of NDos/NDc and NDis/NDc is not less than 0.60, where NDos is the number density of V-containing particles with an equivalent circle diameter of 10 to 100 nm as measured in a cross section perpendicular to a pipe-axis direction and at a depth of 2 mm from an outer surface of the steel pipe, V-containing particles defined as particles with a V content not lower than 30 mass %; NDis is the number density of V-containing particles with an equivalent circle diameter of 10 to 100 nm as measured at a depth of 2 mm from an inner surface of the steel pipe; and NDc is the number density of V-containing particles with an equivalent circle diameter of 10 to 100 nm as measured in a central portion as determined along the wall thickness,

$$\mathrm{Fn1 = C+Mn/6+(Cr+Mo+V)/5+(Cu+Ni)/15 \qquad (1),}$$

where each chemical symbol for an element in Expression (1) is assigned the content of that element in mass %.

2. The seamless steel pipe according to claim 1, wherein the chemical composition includes one or more selected from the group consisting of, in mass %:

0.001 to 0.020 % Nb;

0.001 to 0.020 % Ti;

0.0001 to 0.0005 % B; and

0.0001 to 0.0060 % Ca.

3. The seamless steel pipe according to claim 1 or 2, wherein a yield strength from tensile testing in the pipe-axis direction measured in a round-bar test specimen taken from a central portion along the wall thickness (with a parallel-portion diameter of 12.7 mm and a gauge length of 50.8 mm) as specified in ASTM E8/E8M-21 is not lower than 450 MPa.

4. The seamless steel pipe according to any one of claims 1 to 3,
wherein the seamless steel pipe is a seamless steel pipe for line pipe.

5. The seamless steel pipe according to any one of claims 1 to 4, having a wall thickness not smaller than 40.0 mm.

6. A method of manufacturing the seamless steel pipe according to any one of claims 1 to 5, comprising:

preparing a hollow shell having the chemical composition;

quenching the hollow shell; and

tempering the quenched hollow shell,

the quenching including:

heating the hollow shell to a temperature not lower than 600 °C at an average rate of temperature increase not higher than 5 °C/min in a temperature range of 400 °C to 600 °C;

heating the hollow shell to a holding temperature at an average rate of temperature increase not lower than 10 °C/min in a temperature range of 600 °C to the holding temperature, the holding temperature being a temperature not lower than the $Ac_3$ point;

keeping the hollow shell at the holding temperature for a period of time not shorter than 10 minutes and not longer than 60 minutes; and

cooling the hollow shell which has been held at the holding temperature.

*Fig.1*

*Fig.2*

*Fig.3*

*Fig.4*

## INTERNATIONAL SEARCH REPORT

| International application No. |
|---|
| **PCT/JP2023/031092** |

| A. CLASSIFICATION OF SUBJECT MATTER |
|---|
| *C22C 38/00*(2006.01)i; *C21D 9/08*(2006.01)i; *C22C 38/58*(2006.01)i<br>FI:  C22C38/00 301Z; C22C38/58; C21D9/08 E |
| According to International Patent Classification (IPC) or to both national classification and IPC |

| B. FIELDS SEARCHED |
|---|
| Minimum documentation searched (classification system followed by classification symbols)<br>　　C22C38/00-38/60; C21D9/08 |
| Documentation searched other than minimum documentation to the extent that such documents are included in the fields searched<br>　　Published examined utility model applications of Japan 1922-1996<br>　　Published unexamined utility model applications of Japan 1971-2023<br>　　Registered utility model specifications of Japan 1996-2023<br>　　Published registered utility model applications of Japan 1994-2023 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2019-127620 A (NIPPON STEEL CORP) 01 August 2019 (2019-08-01) | 1-6 |
| A | WO 2011/152240 A1 (SUMITOMO METAL IND) 08 December 2011 (2011-12-08) | 1-6 |
| A | WO 2013/161567 A1 (NIPPON STEEL & SUMITOMO METAL CORP) 31 October 2013 (2013-10-31) | 1-6 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/031092**

| Patent document cited in search report | | | Publication date (day/month/year) | Patent family member(s) | | | Publication date (day/month/year) |
|---|---|---|---|---|---|---|---|
| JP | 2019-127620 | A | 01 August 2019 | (Family: none) | | | |
| WO | 2011/152240 | A1 | 08 December 2011 | US | 2013/0000790 | A1 | |
| | | | | EP | 2578713 | A1 | |
| | | | | CN | 102906292 | A | |
| WO | 2013/161567 | A1 | 31 October 2013 | US | 2015/0083282 | A1 | |
| | | | | EP | 2843072 | A1 | |
| | | | | CN | 104271786 | A | |

Form PCT/ISA/210 (patent family annex) (January 2015)

**EP 4 600 393 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013161567 A1
- WO 2015019708 A1
- WO 2017141341 A1
- WO 2017018108 A1
- WO 2018020972 A1

23